Europäisches Patentamt

(19) European Patent Office

Office européen des brevets

(11) Veröffentlichungsnummer: **0 155 429**
**A1**

(12) **EUROPÄISCHE PATENTANMELDUNG**

(21) Anmeldenummer: 84730143.9

(22) Anmeldetag: 14.12.84

(51) Int. Cl.⁴: **H 02 H 3/20**
**H 02 H 1/06**

(30) Priorität: 24 02.84 DE 3407311

(43) Veröffentlichungstag der Anmeldung:
25.09.85 Patentblatt 85/39

(84) Benannte Vertragsstaaten:
CH DE LI SE

(71) Anmelder Siemens Aktiengesellschaft
Berlin und Munchen Wittelsbacherplatz 2
D-8000 München 2(DE)

(72) Erfinder: Krieser, Friedrich, Dipl.-Ing.
Weisswasserweg 11
D-1000 Berlin 45(DE)

(54) Schaltungsanordnung zur Überwachung einer Spannung.

(57) Die Erfindung bezieht sich auf eine Schaltungsanordnung zur Überwachung einer Spannung mit einem Spannungsteiler und nachgeordneter Schwellwert-Schaltanordnung mit einem Relais.

Um einer derartigen Schaltungsanordnung einen günstigen Abstand zwischen Ansprech- und Rückfallspannung zu geben, ist zwischen dem Spannungsteiler (5) und der Schwellwert-Schaltanordnung (13) eine Konstantstrom-Schaltung (16) angeordnet. Das Relais (36) ist über einen zusätzlichen Eingangsanschluß (37) der Schwellwert-Schaltanordnung (13) an einen Schaltungspunkt (38) des Spannungsteilers (5) angeschlossen, der von dem von dem einen Anschlußende (6) des Spannungsteilers (5) abgewandten Anschluß eines Zusatzwiderstandes (11) des Spannungsteilers (5) gebildet ist.

EP 0 155 429 A1

Siemens Aktiengesellschaft          Unser Zeichen
Berlin und München                  VPA  84P4020E

Schaltungsanordnung zur Überwachung einer Spannung

Die Erfindung bezieht sich auf eine Schaltungsanordnung zur Überwachung einer Spannung mit einem eingangsseitig angeordneten Spannungsteiler, an dessen Abgriff und einem Anschlußende ein Steuereingang einer Schwellwert-Schaltanordnung mit einem Relais angeschlossen ist und dessen eines Anschlußende mit einem Eingangsanschluß und dessen anderes Anschlußende mit einem weiteren Eingangsanschluß der Schwellwert-Schaltanordnung in Verbindung steht. Eine derartige Schaltungsanordnung kann sowohl zum Erfassen des Anstiegs einer Spannung über einen vorgegebenen Wert als auch zum Erfassen eines Abfalls einer Spannung unter einen vorgegebenen Wert benutzt werden, je nachdem wie das Ansprechen bzw. Abfallen des Relais als Signal beispielsweise im Rahmen eines Netzschutzes ausgewertet wird.

Bei einer bekannten, als Unterspannungsschutz ausgeführten Schaltungsanordnung dieser Art (DE-OS 19 35 505) liegt die zu überwachende Spannung nach Gleichrichtung an einem Ohmschen Spannungsteiler. Ein Abgriff des Ohmschen Spannungsteilers bildet zusammen mit seinem einen Anschlußende einen Steuereingang einer Schwellwert-Schaltanordnung, die eingangsseitig eine Transistor-Anordnung enthält. Übersteigt die zu überwachende Spannung einen vorgegebenen Wert, dann wird ein Kurzschluß eines Kondensators aufgehoben, der über einen Widerstand und einen Kontakt eines Relais an dem Spannungsteiler und damit an der aus der zu überwachenden Spannung gewonnenen Gleichspannung liegt. Der Kondensator wird daraufhin aufgeladen; erreicht die Spannung an ihm einen durch einen

Kr 3 Sz / 23.02.1984

0155429

Unijunktion-Transistor vorgegebenen Wert, dann erfolgt über diesen eine Entladung des Kondensators über eine Anzugswicklung des Relais, woraufhin dessen Kontakt umlegt und eine Selbsthaltung des Relais bewirkt. Um ein Rückfallen des Relais bei absinkender Spannung zu erreichen, enthält die Schwellwert-Schaltanordnung der bekannten Schaltungsanordnung einen Schaltungsteil mit einem weiteren Kondensator und mindestens einem weiteren Unijunktion-Transistor. Der Kondensator dieses Schaltungsteils wird beim Umlegen des oben erwähnten Kontaktes des Relais aufgeladen. Wenn die Spannung an ihm auf einen unteren vorgegebenen Wert abgesunken ist, schaltet der zugeordnete Unijunktion-Transistor durch und bewirkt eine Entladung dieses Kondensators über eine Ausschaltwicklung des Relais, das daraufhin in seine Ausgangslage zurückkehrt.

Die bekannte Schaltungsanordnung hat zwar den Vorteil, daß sie ohne eine Hilfsspannungsquelle auskommt, weil die Schaltleistung aus der zu überwachenden Spannung gewonnen wird, ist jedoch insofern verbesserungsbedürftig, als sie verhältnismäßig aufwendig ist.

Der Erfindung liegt daher die Aufgabe zugrunde, eine Schaltungsanordnung zur Überwachung einer Spannung anzugeben, die sich unter Beibehaltung des Vorteils, ohne eine Hilfsspannungsquelle auszukommen, durch einen vergleichsweise einfachen Schaltungsaufbau unter Gewährleistung eines günstigen Abstandes zwischen der Ansprechspannung und der Rückfallspannung auszeichnet.

Zur Lösung dieser Aufgabe ist bei einer Schaltungsanordnung der eingangs angegebenen Art erfindungsgemäß zwischen den Anschlußenden des Spannungsteilers und dem einen und dem weiteren Eingangsanschluß der Schwellwert-Schaltanordnung eine Konstantstrom-Schaltung angeordnet; das einerseits mit dem weiteren Eingangsanschluß der Schwellwert-Schaltanordnung in Verbindung stehende Relais ist andererseits über einen zusätzlichen Eingangsanschluß an einen Schaltungspunkt des Spannungsteilers angeschlossen, der von dem von dem einen Anschlußende des Spannungsteilers abgewandten Anschluß eines Zusatzwiderstandes des Spannungsteilers gebildet ist.

Ein Vorteil der erfindungsgemäßen Schaltungsanordnung besteht darin, daß sie ohne eine Hilfsspannungsquelle auskommt, wobei durch die Verwendung einer Konstantstrom-Schaltung in besonders vorteilhafter Weise ein so großer Strom für das Relais zur Verfügung gestellt wird, daß dieses nicht als empfindliches Melderelais, sondern als Hilfsrelais ausgeführt sein kann, so daß ein zusätzliches Hilfsrelais beim Einsatz der erfindungsgemäßen Schaltungsanordnung eingespart werden kann. Ein weiterer Vorteil der erfindungsgemäßen Schaltungsanordnung wird darin gesehen, daß bei ihr der Abstand zwischen der Ansprechspannung, d. h. der Höhe der zu überwachenden Spannung, bei der das Relais anzieht, und der Rückfallspannung, d. h. der Höhe der zu überwachenden Spannung, bei der das Relais wieder abfällt, weitgehend den jeweiligen Bedürfnissen entsprechend eingestellt werden kann, wobei dies in einfacher Weise im wesentlichen nur dadurch erreicht ist, daß das Relais über den zusätzlichen Eingangsanschluß der Schwellwert-Schaltanordnung mit dem Zusatzwiderstand des Spannungsteilers verbunden ist. Dabei ist durch die erwähnten Maßnahmen die Meßgenauigkeit der erfindungsgemäßen Schaltungsanordnung so gut wie nicht beeinträchtigt.

Bei der erfindungsgemäßen Schaltungsanordnung enthält die Konstantstrom-Schaltung vorteilhafterweise einen zwischen dem anderen Anschlußende des Spannungsteilers und dem weiteren Eingangsanschluß der Schwellwert-Schaltanordnung liegenden Längszweig mit einem steuerbaren Halbleiter-Bauelement, dessen Steueranschluß mit dem einen Anschlußende des Spannungsteilers verbunden ist.

Handelt es sich bei dem Halbleiter-Bauelement um einen Transistor, dann liegt in Reihe mit dessen Kollektor-Emitter-Strecke vorteilhafterweise ein Widerstand, und der von dem Transistor abgewandte Anschluß des Widerstandes ist über eine Zenerdiode mit dem Basis-Anschluß des Transistors verbunden; der Basis-Anschluß ist außerdem über die Parallelschaltung eines Kondensators und eines Hilfswiderstandes mit dem einen Anschlußende des Spannungsteilers verbunden. Der Vorteil einer solchermaßen ausgebildeten Konstantstrom-Schaltung besteht darin, daß durch die Bezugsspannung der Zenerdiode die Konstanz des von der Konstantstrom-Schaltung abgegebenen Stromes und durch den Kondensator aufgrund der Auflade-/Entladezeit das Impulsverhältnis dieses Stromes bestimmt ist.

Bei der erfindungsgemäßen Schaltungsanordnung ist ferner in vorteilhafter Weise zwischen dem einen und dem weiteren Eingangsanschluß der Schwellwert-Schaltanordnung eine Schaltungseinheit mit einem eine Durchbruch-Spannung aufweisenden Schaltungselement angeordnet. Diese Schaltungseinheit hat den besonderen Vorteil, daß nach einer Betätigung der Schwellwert-Schaltanordnung der von der Konstantstrom-Schaltung abgegebene Strom nahezu ausschließlich über das Relais fließt, so daß dieses mit einem verhältnismäßig großen Strom beaufschlagbar ist und daher auch aus diesem Grunde als Hilfsrelais ausgeführt sein kann.

Bei der erfindungsgemäßen Schaltungsanordnung liegt am Steuereingang der Schwellwert-Schaltanordnung vorteilhafterweise ein Transistor mit seiner Basis-Emitter-Strecke in Reihe mit einer weiteren Zenerdiode. Diese Ausführung hat den Vorteil, daß durch die Bezugsspannung der Zenerdiode das Ansprechverhalten der Schwellwert-Schaltanordnung genau bestimmbar ist.

Ferner hat es sich als vorteilhaft erwiesen, wenn dem Steuereingang der Schwellwert-Schaltanordnung ein Tiefpaß vorge-

0155429

ordnet ist. Durch diesen Tiefpaß werden Oberwellen in der zu
überwachenden Spannung unterdrückt, so daß das Ansprechverhalten der Schaltungsanordnung nur durch die Grundwelle beeinflußt ist.

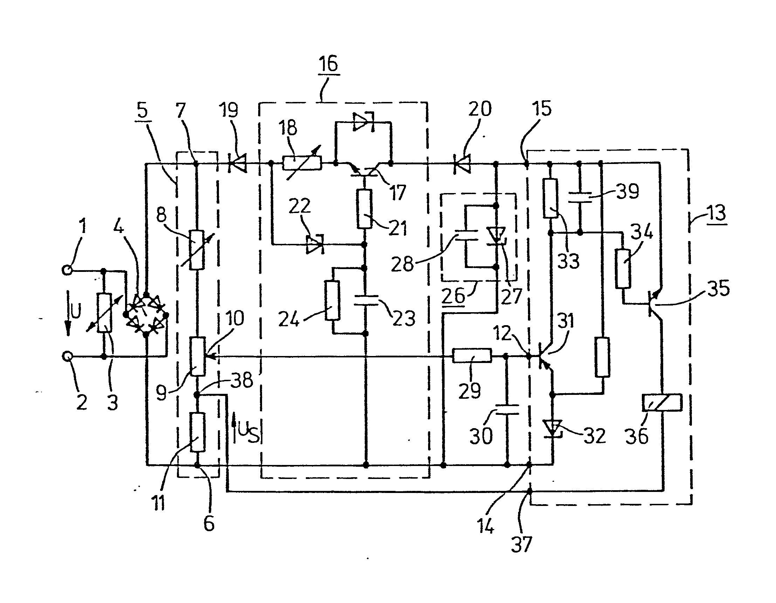

Zur Erläuterung der Erfindung ist in der Figur ein Ausführungsbeispiel der erfindungsgemäßen Schaltungsanordnung dargestellt.

Die zu überwachende Spannung U liegt an Eingangsklemmen 1 und
2 der Schaltungsanordnung, zwischen denen ein spannungsabhängiger Widerstand 3 liegt, der zur Überspannungsableitung
dient. An den Eingangsklemmen 1 und 2 ist ferner ein Brückengleichrichter 4 angeschlossen, dem ein Spannungsteiler 5
nachgeordnet ist.

Der Spannungsteiler 5 weist zwischen seinem einen Anschlußende 6 und seinem anderen Anschlußende 7 einen veränderbaren
Widerstand 8, einen weiteren Widerstand 9 mit einem Abgriff
10 und einen Zusatzwiderstand 11 auf. Der Abgriff 10 des
Spannungsteilers 5 ist mit einem Steueranschluß 12 einer
Schwellwert-Schaltanordnung 13 verbunden. Das eine Anschlußende 6 des Spannungsteilers 5 ist unmittelbar mit einem
Eingangsanschluß 14 der Schwellwert-Schaltanordnung 13 verbunden.

Zwischen dem einen Anschlußende 6 und dem anderen Anschlußende 7 des Spannungsteilers 5 einerseits und dem einen Eingangsanschluß 14 und einem weiteren Eingangsanschluß 15 der
Schwellwert-Schaltanordnung 13 andererseits liegt eine Konstantstrom-Schaltung 16. Diese Konstantstrom-Schaltung 16
weist in einem Längszweig einen Transistor 17 mit seiner
Emitter-Kollektor-Strecke auf. Dabei ist der Emitter des
Transistors 17 über einen Widerstand 18 und eine zur Entkopplung dienende Diode 19 mit dem weiteren Anschlußende 7 des Spannungsteilers 5 verbunden, während der Kollektor des Transistors 17 über eine weitere zur Entkopplung dienende Diode 20 mit dem weiteren Eingangsanschluß 15 der Schwellwert-Schaltanordnung 13 in Verbindung steht. An dem Basis-Anschluß des Transistors 17 ist ein Widerstand 21 angeschlossen, mit dessen von dem Transistor abgewandten Anschluß eine Zenerdiode 22 verbunden ist, die außerdem mit dem von dem Transistor 17 abgewandten Anschluß des Widerstandes 18 verbunden ist. In Reihe mit dem Widerstand 21 liegt im Steuerkreis des Transistors 17 eine Parallelschaltung aus einem Kondensator 23 und einem Widerstand 24. Diese Parallelschaltung ist außerdem mit dem einen Anschlußende 6 des Spannungsteilers 5 verbunden.

Parallel zu dem einen Eingangsanschluß 14 und dem weiteren Eingangsanschluß 15 der Schwellwert-Schaltanordnung 13 liegt eine Schaltungseinheit 26, die in Form einer Zenerdiode 27 ein eine Durchbruchspannung aufweisendes Schaltungselement und einen parallel dazu angeordneten Kondensator 28 enthält.

Dem von dem Steueranschluß 12 und dem einen Eingangsanschluß 14 gebildeten Steuereingang der Schwellwert-Schaltanordnung ist ein aus einem Widerstand 29 und einem Kondensator 30 gebildeter Tiefpaß vorgeordnet, der Frequenzen nicht höher als die Grundwelle der Spannung U durchläßt.

Die Schwellwert-Schaltanordnung 13 enthält an ihrem Steuereingang einen Transistor 31, mit dessen Basis-Emitter-Strecke eine weitere Zenerdiode 32 in Reihe angeordnet ist. Der Kollektor des Transistors 31 ist über einen Widerstand 33 mit dem weiteren Eingangsanschluß 15 der Schwellwert-Schaltanordnung 13 verbunden. Außerdem ist der Kollektor des Transistors 31 über einen Widerstand 34 mit dem Basis-Anschluß eines Schalttransistors 35 verbunden, in dessen Kollektor-Emitter-Kreis ein Relais 36 angeordnet ist. Dabei ist der Emitter-Anschluß des Schalttransistors 35 unmittelbar mit dem weiteren Eingangsanschluß 15 der Schwellwert-Schaltanordnung 13 verbunden, während der Kollektor-Anschluß des Schalttransistors 35 an ein Wicklungsende des Relais 36 geführt ist. Das andere Wicklungsende des Relais 36 ist über einen zusätzlichen Eingangsanschluß 37 der Schwellwert-Schaltanordnung an einen Schaltungspunkt 38 des Spannungsteilers 5 geführt, der den gemeinsamen Verbindungspunkt des Widerstandes 9 und des Zusatzwiderstandes 11 darstellt. Über einen parallel zum Widerstand 33 liegenden Kondensator 39 der Schwellwert-Schaltanordnung 13 wird der Einfluß von Spannungsspitzen in der zu überwachenden Spannung in der Nähe ihrer Ansprechschwelle eliminiert.

Die in der Figur dargestellte Schaltungsanordnung arbeitet in folgender Weise:

Liegt an den Eingangsklemmen 1 und 2 eine Spannung U, dann entsteht am Spannungsteiler 5 eine Spannung. Daraufhin wird von der Konstantstrom-Schaltung 16 ein konstanter Strom erzeugt, der in seiner Größe durch den durch den Widerstand 21 im Basis-Stromkreis des Transistors 17 fließenden Strom bestimmt ist. Dabei ist dieser Strom in seiner Größe abhängig von der Differenz zwischen der Bezugsspannung der Zenerdiode 22 und dem Spannungsabfall des um diesen Strom vergrößerten Durchlaßstromes am Widerstand 18. Auch bei einem Ansteigen der Spannung U an den Eingangsklemmen 1 und 2 bleibt die Bezugsspannung an der Zenerdiode 22 konstant. Der Spannungsabfall am Widerstand 18 kann diesen Wert nicht übersteigen, da die Differenz zwischen der Bezugsspannung der Zenerdiode 22 und dem Spannungsabfall dem Anstieg des Durchlaßstromes entgegenwirkt. Der Spannungsabfall am Widerstand 18 stellt daher ein Abbild des Durchlaßstromes und der Bezugsspannung an der Zenerdiode 22 dar.

0155429

Bei der dargestellten Schaltungsanordnung zur Überwachung einer Wechselspannung U dient der Ladekondensator 23 im Steuer-Stromkreis des Transistors 17 zur Vermeidung einer Abhängigkeit des Gleichstrom-Mittelwertes des von der Konstantstrom-Schaltung 16 abgegebenen Stromes von der Höhe der Wechselspannung, die ansonsten vorhanden wäre, weil die Dauer des Spannungsimpulses an der Zenerdiode 22 von der Höhe der Wechselspannung U abhängig ist. Auf- und Entladezeit dieses Ladekondensators 23 sind nahezu unabhängig vom Anstieg der Spannung U. Einfluß auf das Zeitverhältnis hat der parallel liegende Widerstand 24. Während der Ladezeit des Ladekondensators 23 herrscht an der Zenerdiode 22 die konstante Bezugsspannung, während zur Entladezeit dieses Kondensators die sehr viel niedrige Durchlaßspannung ansteht. Der von der Konstantstrom-Schaltung 16 abgegebene Strom besitzt daher eine Rechteckimpulsform mit konstanter Amplitude und konstantem Tastverhältnis.

Der Ansprechwert der dargestellten Schaltungsanordnung ist im wesentlichen durch die Durchbruchspannung der Zenerdiode 32 bestimmt. Dementsprechend muß zwischen dem Abgriff 10 des Spannungsteilers 5 und dem einen Anschlußende 6 eine Schaltspannung Us vorhanden sein. Eine derartige Schaltspannung liegt nur dann vor, wenn die zu überwachende Spannung U einen entsprechenden Wert angenommen hat. Wenn dies nicht der Fall ist, fließt der von der Konstantstrom-Schaltung 16 abgegebene pulsierende Konstantstrom über die Zenerdiode 27, wobei der entstehende Spannungsabfall vom Kondensator 28 geglättet wird. Die Diode 20 entkoppelt die Schwellwert-Schaltanordnung 13 von der Konstantstrom-Schaltung 16.

Überschreitet die zu überwachende Spannung U einen vorgegebenen Ansprechwert, so daß dann die Schaltspannung Us auftritt, dann fließt über den Widerstand 29 ein Basisstrom, durch den der Transistor 31 durchlässig gesteuert wird. Am Widerstand 33 entsteht dann ein Spannungsabfall, durch den ein Basisstrom über den Widerstand 34 durch den Schalttransistor 35 getrieben wird. Der Schalttransistor 35 wird daraufhin leitend, so daß von dem Konstantstrom der Konstantstrom-Schaltung 16 das Relais 36 erregt wird und schaltet.

Nach dem Ansprechen des Relais 36 fließt sein Spulenstrom durch den Zusatzwiderstand 11 des Spannungsteilers 5. Dadurch wird die Spannung zwischen dem Abgriff 10 und dem einen Anschlußende 6 des Spannungsteilers 5 erhöht. Dies führt in erwünschterweise dazu, daß das Relais erst dann abfällt, wenn sich die zu überwachende Spannung U mindestens um einen Anteil erniedrigt, der dem Anteil des Spannungsabfalls am Zusatzwiderstand 11 bezogen auf die Schaltspannung $U_s$ entspricht. Das heißt, erst wenn die Spannung an den Anschlüssen 6 und 10 trotz der Erhöhung durch den Spannungsabfall am Zusatzwiderstand 11 infolge des Spulentroms unter die Schaltspannung $U_s$ gesunken ist, fällt das Relais 36 ab. Dies bedeutet, daß die Spannung U in diesem Fall erheblich niedriger ist als beim Ansprechen des Relais 36. Damit ist ein günstiger Abstand zwischen dem Ansprech- und dem Rückfallwert erreicht.

1 Figur
6 Ansprüche

Patentansprüche

1. Schaltungsanordnung zur Überwachung einer Spannung mit einem eingangsseitig angeordneten Spannungsteiler, an dessen Abgriff ein Steueranschluß einer Schwellwert-Schaltanordnung mit einem Relais angeschlossen ist und dessen eines Anschlußende mit einem Eingangsanschluß und dessen anderes Anschlußende mit einem weiteren Eingangsanschluß der Schwellwert-Schaltanordnung in Verbindung steht, d a d u r c h  g e k e n n z e i c h n e t , daß zwischen den Anschlußenden (6, 7) des Spannungsteilers (5) und dem einem und dem weiteren Eingangsanschluß (14, 15) der Schwellwert-Schaltanordnung (13) eine Konstantstrom-Schaltung (16) angeordnet ist und daß das einerseits mit dem weiteren Eingangsanschluß (15) der Schwellwert-Schaltanordnung (13) in Verbindung stehende Relais (36) andererseits über einen zusätzlichen Eingangsanschluß (37) an einen Schaltungspunkt (38) des Spannungsteilers (5) angeschlossen ist, der von dem von dem einen Anschlußende (6) des Spannungsteilers (5) abgewandten Anschluß eines Zusatzwiderstandes (11) des Spannungsteilers (5) gebildet ist.

2. Schaltungsanordnung nach Anspruch 1 , d a d u r c h  g e k e n n z e i c h n e t , daß die Konstantstrom-Schaltung (16) einen zwischen dem anderen Anschlußende (7) des Spannungsteilers (5) und dem weiteren Eingangsanschluß (15) der Schwellwert-Schaltanordnung (13) liegenden Längszweig mit einem steuerbaren Halbleiter-Bauelement (17) enthält, dessen Steueranschluß mit dem einen Anschlußende (6) des Spannungsteilers (5) verbunden ist.

3. Schaltungsanordnung nach Anspruch 2 , d a d u r c h  g e k e n n z e i c h n e t , daß bei einem Transistor (17) als Halbleiter-Bauelement in Reihe mit der Kollektor-Emitter-Strecke ein Widerstand (18) liegt und der von dem Transistor (17) abgewandte Anschluß des Widerstandes (18) über eine Zenerdiode (22) mit dem Basis-Anschluß des Transistors (17) verbunden ist und daß der Basis-Anschluß über die Parallelschaltung eines Ladekondensators (23) und eines Hilfswiderstandes (24) mit dem einen Anschlußende (6) des Spannungsteilers (5) verbunden ist.

4. Schaltungsanordnung nach einem der vorangehenden Ansprüche, d a d u r c h   g e k e n n z e i c h n e t , daß zwischen dem einen und dem weiteren Eingangsanschluß (14, 15) der Schwellwert-Schaltanordnung (13) eine Schaltungseinheit (26) mit einem eine Durchbruch-Spannung aufweisenden Schaltungselement (27) angeordnet ist.

5. Schaltungsanordnung nach einem der vorangehenden Ansprüche, d a d u r c h   g e k e n n z e i c h n e t , daß an dem von dem Steueranschluß (12) und dem einen Eingangsanschluß (14) gebildeten Steuereingang der Schwellwert-Schaltanordnung (13) ein Transistor (31) mit seiner Basis-Emitter-Strecke in Reihe mit einer weiteren Zenerdiode (32) liegt.

6. Schaltungsanordnung nach Anspruch 5 , d a d u r c h   g e k e n n z e i c h n e t , daß dem Steuereingang der Schwellwert-Schaltanordnung (13) ein Tiefpaß (30) vorgeordnet ist.

Europäisches
Patentamt

**EUROPÄISCHER RECHERCHENBERICHT**

Nummer der Anmeldung

EP 84 73 0143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-B-1 061 894 (SEL) <br> * Insgesamt * <br><br> --- | 1 | H 02 H 3/20 <br> H 02 H 1/06 |
| A | DE-B-1 296 704 (STEINHOFF) <br> * Figur; Anspruch 1 * <br><br> --- | 1 | |
| A | US-A-3 876 914 (LUKAS) <br> * Figur 1; Zusammenfassung * <br><br> --- | 1 | |
| D,A | DE-A-1 935 505 (SIEMENS) <br><br> ----- | | |

|  |
|---|
| RECHERCHIERTE SACHGEBIETE (Int. Cl.4) |
| H 02 H |

Der vorliegende Recherchenbericht wurde für alle Patentansprüche erstellt

| Recherchenort <br> DEN HAAG | Abschlußdatum der Recherche <br> 20-05-1985 | Prüfer <br> KOLBE W.H. |
|---|---|---|